# FASCICULE DE BREVET EUROPEEN

(11) **EP 3 740 693 B1**
(45) Date de publication et mention de la délivrance du brevet: **01.05.2024**
(21) Numéro de dépôt: 19703169.3
(22) Date de dépôt: 11.01.2019
(51) Int. Cl.: F16D 65/00, F16D 65/092

(54) **PLAQUETTE DE FREIN POUR ENSEMBLE DE FREIN À DISQUE COMPRENANT UNE RAINURE D'ASPIRATION EN ZONE AVANT ET UNE ZONE AVANT CHANFREINÉE**
BREMSBELAG FÜR EINE SCHEIBENBREMSE, MIT EINER SAUGRILLE IN EINEM VORDEREN BEREICH UND EINEM ABGESCHRÄGTEN VORDEREN BEREICH
BRAKE PAD FOR A DISK BRAKE ASSEMBLY, COMPRISING A SUCTION GROOVE IN A FRONT REGION AND A CHAMFERED FRONT REGION

(30) Priorité: 17.01.2018 FR 1850381
(43) Date de publication de la demande: 25.11.2020
(73) Titulaire: Tallano Technologie, 75015 Paris (FR)
(72) Inventeur: ADAMCZAK, Loïc, 38390 Montalieu-Vercieu (FR); MAISTRE, Adrien, 75015 Paris (FR)
(74) Mandataire: Plasseraud IP
(86) Numéro de dépôt international: PCT/FR2019/050061
(87) Numéro de publication internationale: WO 2019/141926

(56) Documents cités:
- EP-A1- 1 369 199
- EP-A1- 2 725 255
- WO-A1-2017/106776
- DE-A1- 19 846 887
- FR-A1- 3 034 831
- GB-A- 2 533 476
- JP-A- 2013 144 585
- US-A1- 2011 290 599

## Description

### Domaine de l'invention

La présente invention concerne les véhicules, notamment automobiles et également les matériels roulants ferroviaires. Plus spécifiquement, l'invention concerne le freinage des véhicules et des matériels roulants ferroviaires. L'invention concerne en outre les plaquettes de frein pour les ensembles de frein à disque pour ces véhicules et ces matériels roulants ferroviaires.

On notera que selon l'invention, le véhicule peut être de tout type et peut notamment être une voiture, un camion ou un bus. De même, le matériel roulant ferroviaire peut être un train, un tramway ou encore un métropolitain.

### Arrière-plan technologique de l'invention

Le document FR 3 034 831 A1 décrit une plaquette de freinage avec une rainure et une ouverture dans la semelle de la plaquette pour obtenir une communication de fluide entre ladite rainure et une source de dépression.

Un véhicule ou un matériel roulant ferroviaire comprend généralement un système de freinage. Le système de freinage peut notamment être un système de frein à disque. Le système de freinage comporte alors un disque solidaire d'une roue ou d'un essieu du véhicule ou du matériel roulant ferroviaire. Ainsi, lorsque la roue, ou l'essieu, entre en rotation pour permettre au véhicule ou au matériel roulant ferroviaire de se déplacer, le disque entre également en rotation.

Ainsi, pour freiner le véhicule ou le matériel roulant ferroviaire, le système de frein à disques comprend des moyens de friction du disque. Les moyens de friction comportent notamment deux semelles qui portent chacune une garniture qui comprend un matériau de friction. Le matériau de friction est configuré pour venir en contact avec le disque. Les deux semelles portant les garnitures de friction sont disposées de part et d'autre du disque de façon à le prendre en tenaille lorsque le système de frein est actionné.

Cependant, lorsque le matériau de friction entre en contact avec le disque pendant que ce dernier est en rotation, le matériau de friction émet des particules nocives pour la santé humaine et l'environnement. Les systèmes de freinage sont donc polluants.

C'est pourquoi, il est connu d'agencer un dispositif d'aspiration des particules issues du freinage dans le système de freinage. Le dispositif d'aspiration est destiné à aspirer les particules du freinage peu après l'émission de ces dernières.

Toutefois, le dispositif d'aspiration est conformé principalement pour fonctionner lorsque la plaquette de freinage est dans une configuration « sortie d'usine ». Ainsi, au cours de son utilisation, l'aspiration des particules de freinage peut s'avérer moins efficace.

### Objet de l'invention

Un but de l'invention est de fournir une plaquette de frein pour un ensemble de frein à disque dont les performances restent constantes au cours du temps.

### Bref résumé de l'invention

Pour ce faire, on prévoit selon l'invention une plaquette de frein pour un ensemble de frein à disque, comprenant une garniture en matériau de friction et une semelle supportant la garniture, dans laquelle :
- la garniture comprend :
   o une face de friction et une face de fixation,
   o un bord arrière, situé du côté où le disque est apte à sortir d'une interface avec la plaquette lorsque le disque tourne dans une direction d'avancement du véhicule, et un bord avant,
   o un bord intérieur et un bord extérieur, et
   o une rainure de collecte ouverte sur la face de friction et agencée à proximité du bord arrière, la rainure de collecte débouchant sur l'un parmi les bords intérieur et extérieur,
- la semelle comportant un trou en communication de fluide avec la rainure de collecte, le trou étant relié à une source de dépression via des moyens de communication, la garniture comportant une zone arrière comportant le bord arrière et la rainure de collecte et une zone avant comportant le bord avant, caractérisée en ce que la zone avant comporte portion chanfreinée de sorte qu'une aire d'une surface de friction de la zone avant augmente lorsqu'une épaisseur de la zone avant diminue, et en ce que la rainure de collecte s'étend entre une extrémité débouchante et une extrémité borgne, le trou de la semelle débouchant dans la rainure de collecte à proximité de l'extrémité borgne.

Ainsi, la portion chanfreinée de la zone avant permet de roder au mieux la fonction de freinage. De plus, une captation des particules de freinage est d'autant plus efficace que la rainure de collecte est disposée à proximité du bord arrière et qu'une aire d'une surface de friction disposée entre la rainure de collecte et le bord avant est importante. En outre, la présence de la portion chanfreinée sur la zone avant permet de déplacer le centre masse de la garniture vers la zone avant. Ainsi, lorsqu'une pression est exercée sur la semelle qui supporte la garniture pour imposer un contact entre la garniture et le disque, la zone avant va être usée plus rapidement, ce qui va conduire à une augmentation de l'aire de la surface de friction de la zone avant. En conséquence, l'aire de la surface de friction disposée entre la rainure de collecte et le bord avant augmente avec l'usure du matériau. De plus, l'absence de chanfrein, ou le fait d'avoir un chanfrein réduit près de la zone arrière assure que l'efficacité de la collecte des particules de freinage est donc conservée ou au moins peu diminuée avec le temps.

En outre, la portion chanfreinée disposée en zone avant permet d'assurer un contact moins brutal entre la garniture et le disque. La plaquette de frein présente ainsi de meilleures performances acoustiques, le bruit durant le freinage étant réduit.

En outre, dans divers modes de réalisation de l'invention, on peut avoir également recours à l'une et/ou à l'autre des dispositions suivantes :
- la zone arrière comprend une portion chanfreinée de sorte qu'une aire d'une surface de friction de la zone arrière augmente lorsqu'une épaisseur de la zone arrière diminue de façon à ce que pour une même diminution d'épaisseur, l'aire de la surface de friction de la zone arrière augmente relativement moins que l'aire de la surface de friction de la zone avant ; on notera bien entendu que par « relativement moins », on entend que l'aire de la surface de friction de la zone arrière peut ne pas augmenter du tout lorsque l'épaisseur de la zone arrière diminue ;
- une aire de la portion chanfreinée de la zone arrière est inférieure à une aire de la portion chanfreinée de la zone avant ; les portions chanfreinées sont ainsi dissymétriques, on conforme donc au mieux la plaquette de frein ;
- les portions chanfreinées des zones arrière et avant sont planes, un angle formé entre la portion chanfreinée de la zone arrière et un plan comprenant la face de fixation est supérieur à un angle formé entre la portion chanfreinée de la zone avant et le plan comprenant la face de fixation ;
- la portion chanfreinée de la zone arrière comporte une bordure extérieure et une bordure intérieure, la bordure intérieure présentant une longueur relativement moins importante qu'une longueur de la bordure extérieure ;
- la portion chanfreinée de la zone avant comporte une bordure extérieure et une bordure intérieure, la bordure intérieure présentant une longueur relativement moins importante qu'une longueur de la bordure extérieure ;
- la zone arrière comporte deux parois, dont l'une porte une surface de friction de la zone arrière, les deux parois comprenant une arrête commune et formant entre elles sensiblement un angle droit ;
- la rainure de collecte est disposée à une distance du bord arrière inférieure à 10 millimètres ;
- la rainure de collecte est creusée directement dans le matériau de friction, jusqu'à la surface de la semelle.

On prévoit également selon l'invention un ensemble de frein à disque comportant un disque et deux plaquettes de frein telles que décrites ci-dessus et disposées de part et d'autre du disque.

On prévoit enfin selon l'invention un système de frein à disque comprenant un ensemble de frein à disque tel que décrit ci-dessus et dans lequel le disque est solidaire d'un essieu ou d'une roue.

### Brève description des dessins

On va maintenant décrire, à titre d'exemple non limitatif, un mode de réalisation de l'invention à l'aide des figures suivantes :
- la figure 1 représente en perspective un système de frein à disque selon un mode de réalisation de l'invention,
- la figure 2 représente ce système de frein à disque, vu depuis un axe perpendiculaire à un plan principal d'un disque du système de frein à disque,
- la figure 3 illustre en perspective une plaquette de frein du système de frein à disque,
- la figure 4 illustre en coupe selon le plan IV-IV repéré sur la figure 3, la plaquette de frein,
- la figure 5 représente selon ce même plan de coupe une plaquette selon une variante du mode de réalisation de l'invention,
- la figure 6 illustre selon ce même plan de coupe une plaquette selon une autre variante du mode de réalisation de l'invention.

### Description détaillée d'un mode de réalisation de l'invention

On notera que par souci de clarté, seuls les éléments utiles à la compréhension des modes de réalisation décrits ont été représentés et seront détaillés.

En outre, sauf précision contraire, les expressions "sensiblement", "environ" etc. signifient qu'une légère variation par rapport à la valeur nominale considérée est possible, notamment d'un pourcentage faible, en particulier à 10% près.

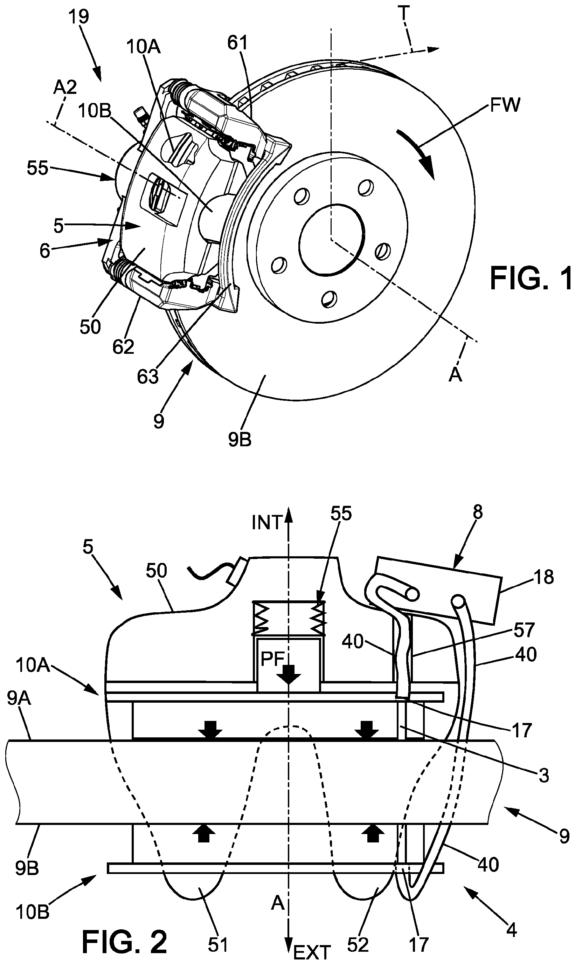

On a représenté aux figures 1 et 2 un système de frein à disque 19 selon l'invention pour un véhicule. Dans ce mode de réalisation, le véhicule est un véhicule automobile, dans le cas d'espèce une voiture légère. On notera toutefois que l'invention peut être mise en oeuvre pour tout type de véhicule, tel qu'un tracteur pour semi-remorque, un bus ou un tracteur agricole, ou pour tout type de matériel roulant ferroviaire, tel qu'une locomotive ou un wagon.

Le système de frein à disque 19 selon l'invention comporte un disque 9, d'axe A solidaire d'une roue du véhicule. Le disque 9 présente une face latérale 9A et une face latérale 9B opposée. Les faces latérales 9A, 9B sont perpendiculaires à l'axe A. Le disque 9 est également relié à un mécanisme de transmission, par l'intermédiaire notamment d'un moyeu, lui-même relié à un moteur du véhicule. Ainsi, le mécanisme de transmission permet de transmettre à la roue du véhicule, par l'intermédiaire du disque 9, un mouvement de rotation autour de l'axe A et ce, afin de déplacer le véhicule.

En outre, le système de frein à disque 19 comporte un étrier 5 qui enserre, de façon à prendre en sandwich, une portion du disque 9. Comme illustré notamment sur la figure 2, l'étrier 5 se présente sous la forme d'un corps principal 50 qui présente une forme général en U de façon à enserrer le disque 9. En outre, le corps principal 50 comporte une cavité permettant de loger un piston 55. L'étrier 5 comporte aussi deux doigts 51, 52. Le piston 55 est apte à exercer une force PF selon une direction A2 repérée sur la figure 1 et qui est parallèle à l'axe A du disque.

Sur la figure 1, on a représenté un sens de rotation FW du disque 9 qui correspond à une marche avant du véhicule. On a également représenté une direction tangentielle T au disque 9.

On définit en outre pour le système de frein à disque 19 un côté arrière et un côté avant opposé. Le côté arrière correspond au côté où le disque 9 sort de l'interface avec l'étrier 5 lorsque le disque 9 tourne dans la direction d'avancement du véhicule. Le côté avant est le côté opposé et correspond au côté où le disque 9 entre dans l'interface avec l'étrier 5 lorsque le disque 9 tourne dans la direction d'avancement du véhicule. De plus, on définit pour une direction radiale allant de l'axe A vers la circonférence du disque 9, une direction qui va de l'intérieur vers l'extérieur.

Le système de frein à disque 19 comprend un support d'étrier 6 qui est fixé à un organe du véhicule. Cet organe peut notamment être un bras de suspension du véhicule. En outre, le support d'étrier 6 comprend deux pontets 61, 62 disposés à deux extrémités longitudinales de l'étrier 5 et un arc de liaison 63 qui relie les deux pontets 61, 62. Le pontet 61 est un pontet arrière et le pontet 62 est un pontet avant.

Le système de frein à disque 19 comporte aussi deux plaquettes de frein 10A, 10B logées dans l'étrier 5. Les deux plaquettes de frein 10A, 10B sont disposées de part et d'autre du disque 9. La plaquette de frein 10A est disposée en regard de la face latérale 9A du disque 9. La plaquette de frein 10B est disposée en regard de la face latérale 9B du disque 9. Ainsi, les deux plaquettes de frein 10A, 10B sont disposées symétriquement par rapport à un plan comportant le disque 9 et perpendiculaire à l'axe A du disque 9.

Le piston 55 de l'étrier 5 est agencé pour exercer la force PF sur la plaquette de frein 10A de sorte que les deux plaquettes 10A, 10B viennent en contact avec le disque 9 de façon à freiner le véhicule lorsque le système de frein à disque 19 est actionné par un conducteur du véhicule. On note que dans l'exemple illustré, l'étrier 5 est monté « flottant » dans le support d'étrier 6, le long de l'axe A. Ainsi, l'étrier 5 peut se déplacer parallèlement à l'axe A notamment pour compenser l'usure progressive des plaquettes 10A, 10B. En revanche l'étrier 5 est maintenu solidaire du support d'étrier 6 selon les autres translations et rotations potentielles. Le montage flottant est habituellement réalisé grâce à des colonnettes coulissantes selon l'axe A.

On va maintenant décrire plus en détail, la plaquette de frein 10A. En tenant compte des effets de symétrie, la description qui suit est également valable pour la plaquette de frein 10B.

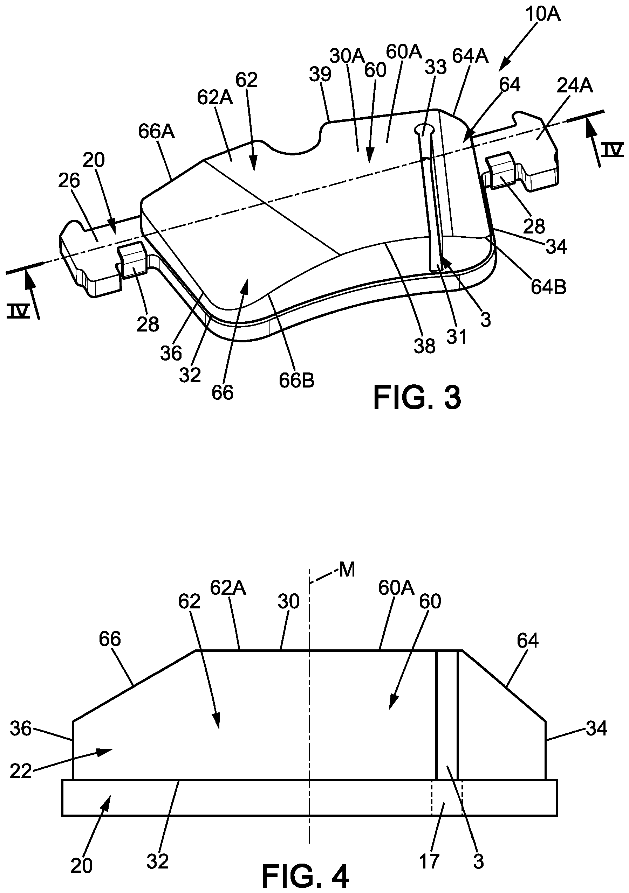

La plaquette 10A est notamment illustrée aux figure 3 et 4. Ainsi, la plaquette de frein 10A comprend une semelle 20 qui supporte une garniture de friction 22. La semelle 20 se présente sous la forme d'une plaque pleine métallique et d'épaisseur sensiblement constante. La semelle 20 comporte un bras arrière 24 et un bras avant 26 qui permettent de fixer la semelle 20 au corps principal 55 de l'étrier 5 au moyen de crochets 28. La semelle 20 comporte une face de fixation à laquelle est fixée la garniture de friction 22. La face opposée à la face de fixation est fixée au piston 55 comme illustré sur la figure 2.

La garniture de friction 22 se présente sous la forme d'un corps en matériau de friction apte à venir en contact avec la face latérale 9A du disque 9 afin de freiner le véhicule. Le matériau de friction est appelé « ferodo ». La garniture de friction 22 comporte donc une face de friction 30 destinée à entrer en contact direct avec la face latérale 9A du disque 9. La garniture de friction 22 comporte aussi une face de fixation 32, opposée à la face de friction 30, et fixée directement à la face de fixation de la semelle 20. De plus, en référence aux côtés précédemment définis, la garniture de friction 22 comporte un bord arrière 34 et un bord avant 36 opposé. La garniture de friction 22 comporte également un bord intérieur 38 et un bord extérieur 39.

Lorsque le système de frein à disque 19 est actionné, le contact entre la face de friction 30 de la garniture de friction 22 de la plaquette de frein 10A et la face latérale 9A du disque 9 génère l'émission de particules de freinage polluantes. Ces particules de freinage correspondent à des particules du matériau de friction qui se détachent de la garniture de friction 22 par abrasion avec la face latérale 9A du disque 9 et également à des particules qui se détachent du disque 9. C'est pourquoi, le système de frein à disque 19 comporte des moyens d'aspiration des particules de freinage décrites ci-après.

La garniture de friction 22 comporte une rainure de collecte 3. La rainure de collecte 3 est ouverte sur la face de friction 30 et est agencée à proximité du bord arrière 34 de la garniture de friction 22. Ainsi, en marche avant du véhicule, les particules de freinage sont entrainées vers la rainure de collecte 3, ce qui permet d'améliorer l'efficacité de la collecte. De préférence, la rainure de collecte 3 est disposée à une distance maximale du bord arrière 34 de la garniture de friction 22 qui est sensiblement inférieure à 10 millimètres, ou 8 millimètres, ou 6 millimètres ou 3 millimètres.

Lorsque le véhicule est freiné alors qu'il est en marche avant, les particules de freinage sont émises vers l'avant FW, en référence à la marche avant du véhicule. Ainsi, la captation des particules de freinage est d'autant plus efficace que la rainure de collecte 3 est disposée près d'une bordure arrière d'une portion de la face de friction 30 qui est directement en contact avec la face latérale 9A du disque 9.

Comme représenté à la figure 2, la rainure de collecte 3 est unique et continue. Elle est de largeur constante. En outre, la rainure de collecte 3 est directement creusée dans le matériau de friction et ce, jusqu'à la semelle 20. De plus, la rainure de collecte 3 s'étend principalement selon une direction sensiblement parallèle à une direction qui va de l'intérieur vers l'extérieur de la garniture de friction 22. De même, la rainure de collecte 3 est sensiblement parallèle au bord arrière 34 de la garniture de friction 22.

La rainure de collecte 3 s'étend en outre entre une extrémité débouchante 31 et une extrémité borgne 33. L'extrémité débouchante 31 est disposée sur le bord intérieur 38 de la garniture de friction 22. L'extrémité borgne 33 est disposée à proximité du bord extérieur 39. Bien entendu, l'extrémité débouchante 31 peut aussi être disposée sur le bord extérieur 39 de la garniture de friction 22. L'extrémité borgne 33 peut aussi être disposée à proximité du bord intérieur 38 de la garniture de friction 22.

La semelle 20 comporte un trou 17 qui débouche dans la rainure de collecte 3. Le trou 17 est sensiblement en regard de l'extrémité borgne 33. Le trou 17 peut être plus généralement disposé à proximité de l'extrémité borgne 33. Le trou 17 est aussi en communication pneumatique avec la rainure de collecte 3.

De plus, comme illustré sur la figure 2, le système de frein à disque 19 comporte un dispositif d'aspiration 8 en communication pneumatique avec le trou 17 au moyen d'un tuyau souple 40 qui traverse le corps principal 50 de l'étrier 5. Le dispositif d'aspiration 8 comporte une source de dépression, par exemple une turbine, et un filtre permettant de filtrer l'air aspiré et chargé en particules de freinage. La source de dépression est configurée pour aspirer depuis la rainure de collecte 3.

Ainsi, le trou 17 est relié à une source de dépression via des moyens de communication qui comportent ici le tuyau souple 40.

De plus, la garniture de friction 22 comporte une zone arrière 60 et une zone avant 62. La zone arrière 60 comporte le bord arrière 34 de la garniture de friction 22 et la rainure de collecte 3. La zone avant 62 comporte le bord avant 36. La zone arrière 60 et la zone avant 62 sont disposées l'une à la suite de l'autre et sont en contacts. Elles occupent chacune sensiblement une moitié de la garniture de friction 22. On a représenté à la figure 4, un axe M qui délimite la frontière entre la zone arrière 60 et la zone avant 62.

La zone arrière 60 comporte une surface de friction 60A qui est une surface apte à entrer directement en contact avec la face latérale 9A du disque 9. De même, la zone avant 62 comporte une surface de friction 62A qui est une surface apte à entrer directement en contact avec la face latérale 9A du disque 9.

La zone arrière 60 comporte une portion chanfreinée 64 qui relie la surface de friction 60A de la zone arrière 60 et le bord arrière 34 de la garniture de friction 22 de sorte qu'une épaisseur de garniture de friction 22 est plus importante au niveau d'une portion qui comporte la surface de friction 60A qu'au niveau d'une portion qui comprend le bord arrière 34. Ainsi, lorsque l'épaisseur de la zone arrière 60 diminue, notamment en raison de l'usure due à l'utilisation de la plaquette de frein 10A, une aire de la surface de friction 60A de la zone arrière 60 augmente.

De même, la zone avant 62 comporte une portion chanfreinée 66 qui relie la surface de friction 62A de la zone avant 62 et le bord avant 36 de la garniture de friction 22 de sorte qu'une épaisseur de garniture de friction 22 est plus importante au niveau d'une portion qui comporte la surface de friction 62A qu'au niveau d'une portion qui comprend le bord avant 36. Ainsi, lorsque l'épaisseur de la zone avant 62 diminue, notamment en raison de l'usure due à l'utilisation de la plaquette de frein 10A, une aire de la surface de friction 62A de la zone avant 62 augmente.

Toutefois, comme illustré sur les figures 3 et 4, une aire de la portion chanfreinée 64 de la zone arrière 60 est inférieure à une aire de la portion chanfreinée 66 de la zone avant 62. Ainsi, comme on le constate notamment sur la figure 4, pour une même diminution d'épaisseur maximale, correspondant à la disparition des portions chanfreinées 64, 66, l'aire de la surface de friction 60A de la zone arrière 60 augmente relativement moins que l'aire de la surface de friction 62A de la zone avant 62.

La zone arrière 60 est donc « moins chanfreinée » que la zone avant 62. Ainsi, avec l'usure de la garniture de friction 22, l'aire de la surface de friction 60A va plus augmenter. Ainsi, plus de particules de freinage seront émises depuis la zone avant 62 vers l'arrière. L'efficacité de la captation des particules de freinage est donc conservée avec le temps.

En outre, comme l'aire de la portion chanfreinée 64 de la zone arrière 60 est inférieure à l'aire de la portion chanfreinée 66 de la zone avant 62, le centre de masse de la garniture de friction 22 est plus proche du bord arrière 34 que du bord avant 36. Ainsi, comme l'application de la force PF du piston 55 se fait sensiblement entre le bord arrière 34 et le bord avant 36, la portion chanfreinée 66 de la zone avant 62 aura tendance à s'user plus rapidement que la portion chanfreinée 64 de la zone arrière 60 ce qui conduit également à émettre plus de particules de freinage en amont de la rainure de collecte 3.

Les portions chanfreinées 64, 66 respectivement des zones arrière 60 et avant 62 ont aussi pour propriété de permettre une mise en contact moins brutale entre la face latérale 9A du disque 9 et la garniture de friction 22. Ainsi, le bruit et les vibrations générés lors du freinage sont diminués. En outre, les portions chanfreinées 64, 66 forment des rampes pour évacuer de l'eau, par exemple provenant de précipitations.

De plus, comme on le constate sur la figure 3, la portion chanfreinée 64 de la zone arrière 60 comporte une bordure intérieure 64A et une bordure extérieure 64B qui sont respectivement partiellement confondues avec les bords intérieur 38 et extérieur 39 de la garniture de friction 22. La bordure intérieure 64A présente une longueur relativement moins importante que la bordure extérieure 64B.

De même, la portion chanfreinée 66 de la zone avant 62 comporte une bordure intérieure 66A et une bordure extérieure 66B qui sont respectivement partiellement confondues avec les bords intérieur 38 et extérieur 39 de la garniture de friction 22. La bordure intérieure 66A présente une longueur relativement moins importante que la bordure extérieure 66B.

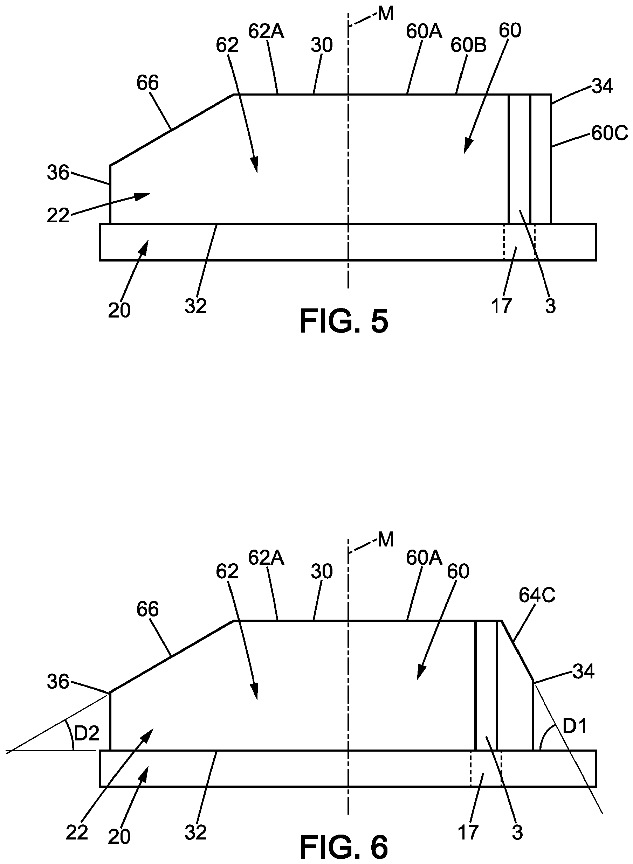

On a représenté aux figures 5 et 6 deux variantes du présent mode de réalisation. Seules les différences avec le présent mode de réalisation vont être indiquées.

Selon la variante illustrée à la figure 5, la zone arrière 60 ne comporte pas la portion chanfreinée 64. Ainsi, durant toute la durée de vie de la plaquette de frein 10A, la rainure de collecte 3 reste à proximité du bord arrière 34 de la garniture de friction 22. La zone arrière 60 comporte ainsi deux parois 60B, 60C. La paroi 60B porte la surface de friction 60A de la zone arrière 60. En outre, la paroi 60C est disposée perpendiculairement à la paroi 60B et relie la paroi 60B à la semelle 20. De plus, les parois 60B et 60C comportent une arrête commune qui est ici le bord arrière 34.

Selon la variante illustrée à la figure 6, la portion chanfreinée 64C de la zone arrière 60 est plane et définit un angle D1 avec un plan qui comporte la semelle 20. L'angle D1 est défini par l'intersection entre le prolongement de la portion chanfreinée 64C et le plan qui comprend la face de fixation 32. De même, la portion chanfreinée 66 est plane et définit un angle D2 avec le plan qui comporte la semelle 20. L'angle D2 est aussi défini par l'intersection entre le prolongement de la portion chanfreinée 66 et le plan qui comprend la face de fixation 32. Selon cette variante, D1 est plus grand que D2. La portion chanfreinée 64C de la zone arrière 60 est ainsi « plus pentue » que la portion chanfreinée 66 de la zone avant 62. On obtient ainsi également l'effet technique décrit ci-dessus.

On pourra bien entendu apporter à l'invention de nombreuses modifications sans sortir du cadre de celle-ci.

On pourra notamment utiliser tout type de source de dépression ou plus généralement de moyens d'aspiration.

On pourra aussi utiliser tout type de matériau pour la garniture de friction 22.

## Revendications

1. Plaquette de frein (10A, 10B) pour un ensemble de frein à disque (9), comprenant une garniture (22) en matériau de friction et une semelle (20) supportant la garniture (22), dans laquelle :
- la garniture (22) comprend :
∘ une face de friction (30) et une face de fixation (32),
∘ un bord arrière (34), situé du côté où le disque (9) est apte à sortir d'une interface avec la plaquette (10A, 10B) lorsque le disque (9) tourne dans une direction d'avancement du véhicule, et un bord avant (36),
∘ un bord intérieur (38) et un bord extérieur (39), et
∘ une rainure de collecte (3) ouverte sur la face de friction (30) et agencée à proximité du bord arrière (34), la rainure de collecte (3) débouchant sur l'un parmi les bords intérieur (38) et extérieur (39),
- la semelle (20) comportant un trou (17) en communication de fluide avec la rainure de collecte (3), le trou (17) étant relié à une source de dépression via des moyens de communication (40),
la garniture (22) comportant une zone arrière (60) comportant le bord arrière (34) et la rainure de collecte (3) et une zone avant (62) comportant le bord avant (36), **caractérisée en ce que** la zone avant (62) comporte une portion chanfreinée (66) de sorte qu'une aire d'une surface de friction de la zone avant (62) augmente lorsqu'une épaisseur de la zone avant (62) diminue, et
**en ce que** la rainure de collecte (3) s'étend entre une extrémité débouchante (31) et une extrémité borgne (33), le trou (17) de la semelle (20) débouchant dans la rainure de collecte (3) à proximité de l'extrémité borgne (33).

2. Plaquette de frein (10A, 10B) selon la revendication précédente, dans laquelle la zone arrière (60) comprend une portion chanfreinée (64) de sorte qu'une aire d'une surface de friction de la zone arrière (60) augmente lorsqu'une épaisseur de la zone arrière (60) diminue de façon à ce que pour une même diminution d'épaisseur, l'aire de la surface de friction de la zone arrière (60) augmente relativement moins que l'aire de la surface de friction de la zone avant (62).

3. Plaquette de frein (10A, 10B) selon la revendication 2, dans laquelle une aire de la portion chanfreinée (64) de la zone arrière (60) est inférieure à une aire de la portion chanfreinée (66) de la zone avant (62).

4. Plaquette de frein (10A, 10B) selon l'une quelconque des revendications 2 et 3, dans laquelle les portions chanfreinées (64, 66) des zones arrière (60) et avant (62) sont planes, un angle (D1) formé entre la portion chanfreinée (64) de la zone arrière (60) et un plan comprenant la face de fixation est supérieur à un angle (D2) formé entre la portion chanfreinée (66) de la zone avant (62) et le plan comprenant la face de fixation (32).

5. Plaquette de frein (10A, 10B) selon l'une quelconque des revendications 2 à 4, dans laquelle la portion chanfreinée (64) de la zone arrière (60) comporte une bordure extérieure (64A) et une bordure intérieure (64B), la bordure intérieure (64B) présentant une longueur relativement moins importante qu'une longueur de la bordure extérieure (64A).

6. Plaquette de frein (10A, 10B) selon l'une quelconque des revendications précédentes, dans laquelle la portion chanfreinée (66) de la zone avant (62) comporte une bordure extérieure (66A) et une bordure intérieure (66B), la bordure intérieure (66B) présentant une longueur relativement moins importante qu'une longueur de la bordure extérieure (66A).

7. Plaquette de frein (10A, 10B) selon la revendication 1, dans laquelle la zone arrière (60) comporte deux parois (60B, 60C), dont l'une (60B) porte une surface de friction de la zone arrière (60), les deux parois (60B, 60C) comprenant une arrête commune (34) et formant entre elles sensiblement un angle droit.

8. Plaquette de frein (10A, 10B) selon l'une quelconque des revendications précédentes, dans laquelle la rainure de collecte (3) est disposée à une distance du bord arrière (34) inférieure à 10 millimètres.

9. Plaquette de frein (10A, 10B) selon l'une quelconque des revendications précédentes, dans laquelle la rainure de collecte (3) est creusée directement dans le matériau de friction, jusqu'à la surface de la semelle (20).

10. Ensemble de frein à disque comportant un disque (9) et deux plaquettes de frein (10A, 10B) selon l'une quelconque des revendications précédentes disposées de part et d'autre du disque (9).

11. Système de frein à disque (19) comprenant un ensemble de frein à disque (9) selon la revendication précédente, dans lequel le disque (9) est solidaire d'un essieu ou d'une roue.

## Patentansprüche

1. Bremsbelag (10A, 10B) für eine Scheibenbremsenanordnung (9), aufweisend einen Reibbelag (22) aus Reibungsmaterial und eine den Reibbelag (22) tragende Sohle (20), in welchem
- der Reibbelag (22) aufweist:
o eine Reibfläche (30) und eine Befestigungsfläche (32),
o einen hinteren Rand (34), der sich auf derjenigen Seite befindet, wo die Scheibe (9) fähig ist, aus einer Schnittstelle (einem Wechselwirkungsbereich) mit dem Bremsbelag (10A, 10B) auszutreten, wenn die Scheibe (9) sich in eine Vorwärtsrichtung des Fahrzeugs dreht, und einen vorderen Rand (36),
o einen Innenrand (38) und einen Außenrand (39), und
o eine Sammelrille (3), die an der Reibfläche (30) offen ist und nahe an dem hinteren Rand (34) angeordnet ist, wobei die Sammelrille (3) an dem Innenrand (38) oder dem Außenrand (39) ausmündet,
- die Sohle (20) ein Loch (17) in Fluidverbindung mit der Sammelrille (3) aufweist, wobei das Loch (17) über Verbindungseinrichtungen (40) mit einer Unterdruckquelle verbunden ist,
wobei der Reibbelag (22) aufweist: einen hinteren Bereich (60), der den hinteren Rand (34) und die Sammelrille (3) aufweist, und einen vorderen Bereich (62), der den vorderen Rand (36) aufweist,
**dadurch gekennzeichnet, dass** der vordere Bereich (62) einen abgeschrägten Teil (66) aufweist, so dass, wenn eine Dicke des vorderen Bereichs (62) abnimmt, ein Flächeninhalt einer Reiboberfläche des vorderen Bereichs (62) zunimmt, und
dadurch, dass die Sammelrille (3) sich zwischen einem Mündungsende (31) und einem blinden Ende (33) erstreckt, wobei das Loch (17) der Sohle (20) nahe an dem blinden Ende (33) in die Sammelrille (3) mündet.

2. Bremsbelag (10A, 10B) nach dem vorstehenden Anspruch, in welchem der hintere Bereich (60) einen abgeschrägten Teil (64) aufweist, so dass, wenn eine Dicke des hinteren Bereichs (60) abnimmt, ein Flächeninhalt einer Reiboberfläche des hinteren Bereichs (60) zunimmt, derart, dass für eine gleiche Dickenabnahme der Flächeninhalt der Reiboberfläche des hinteren Bereichs (60) relativ weniger zunimmt als der Flächeninhalt der Reiboberfläche des vorderen Bereichs (62).

3. Bremsbelag (10A, 10B) nach Anspruch 2, in welchem ein Flächeninhalt des abgeschrägten Teils (64) des hinteren Bereichs (60) kleiner als ein Flächeninhalt des abgeschrägten Teils (66) des vorderen Bereichs (62) ist.

4. Bremsbelag (10A, 10B) nach einem der Ansprüche 2 und 3, in welchem die abgeschrägten Teile (64, 66) des hinteren (60) und vorderen (62) Bereichs eben sind, und ein Winkel (D1), der zwischen dem abgeschrägten Teil (64) des hinteren Bereichs (60) und einer Ebene, die die Befestigungsfläche aufweist, gebildet ist, größer ist als ein Winkel (D2), der zwischen dem abgeschrägten Teil (66) des vorderen Bereichs (62) und einer Ebene, die die Befestigungsfläche (32) aufweist, gebildet ist.

5. Bremsbelag (10A, 10B) nach einem der Ansprüche 2 bis 4, in welchem der abgeschrägte Teil (64) des hinteren Bereichs (60) eine Außenkante (64A) und eine Innenkante (64B) aufweist, wobei die Innenkante (64B) eine Länge aufweist, die relativ kleiner ist als eine Länge der Außenkante (64A).

6. Bremsbelag (10A, 10B) nach einem der vorstehenden Ansprüche, in welchem der abgeschrägte Teil (66) des vorderen Bereichs (62) eine Außenkante (66A) und eine Innenkante (66B) aufweist, wobei die Innenkante (66B) eine Länge aufweist, die relativ kleiner ist als eine Länge der Außenkante (66A).

7. Bremsbelag (10A, 10B) nach Anspruch 1, in welchem der hintere Bereich (60) zwei Wände (60B, 60C) aufweist, von denen die eine (60B) eine Reiboberfläche des hinteren Bereichs (60) trägt, wobei die zwei Wände (60B, 60C) eine gemeinsame Kante (arrête -> arête) (34) haben und zwischen sich im Wesentlichen einen rechten Winkel bilden.

8. Bremsbelag (10A, 10B) nach einem der vorstehenden Ansprüche, in welchem die Sammelrille (3) in einem Abstand von weniger als 10 Millimeter von dem hinteren Rand (34) angeordnet ist.

9. Bremsbelag (10A, 10B) nach einem der vorstehenden Ansprüche, in welchem die Sammelrille (3) direkt in das Reibungsmaterial bis hin zu der Oberfläche der Sohle (20) eingetieft ist.

10. Scheibenbremsenanordnung aufweisend eine Scheibe (9) und zwei Bremsbeläge (10A, 10B) nach einem der vorstehenden Ansprüche, die beiderseits der Scheibe (9) angeordnet sind.

11. Scheibenbremsensystem (19) aufweisend eine Scheibenbremsenanordnung (9) nach dem vorstehenden Anspruch, in welchem die Scheibe (9) mit einer Achse oder einem Rad integral ist.

## Claims

1. Brake pad (10A, 10B) for a disk brake assembly (9), comprising a lining (22) made of friction material and a plate (20) supporting the lining (22), wherein:
- the lining (22) comprises:
-- a friction face (30) and a fastening face (32),
-- a rear edge (34) located on the side where the disk (9) is able to come out of an interface with the pad (10A, 10B) when the disk (9) rotates in a direction of forwards travel of the vehicle, and a front edge (36),
-- an inner edge (38) and an outer edge (39), and
-- a collection groove (3) that opens into the friction face (30) and is arranged close to the rear edge (34), the collection groove (3) opening out onto one of either the inner edge (38) or the outer edge (39),
- the plate (20) including a hole (17) in fluid communication with the collection groove (3), the hole (17) being connected to a source of negative pressure via communication means (40),
the lining (22) including a rear region (60) including the rear edge (34) and the collection groove (3), and a front region (62) including the front edge (36),
**characterized in that** the front region (62) includes a chamfered portion (66) such that an area of a friction surface of the front region (62) increases as a thickness of the front region (62) decreases, and
**in that** the collection groove (3) extends between an open end (31) and a blind end (33), the hole (17) of the plate (20) opening out into the collection groove (3) close to the blind end (33).

2. Brake pad (10A, 10B) according to the preceding claim, wherein the rear region (60) comprises a chamfered portion (64) such that an area of a friction surface of the rear region (60) increases as a thickness of the rear region (60) decreases such that, for the same decrease in thickness, the area of the friction surface of the rear region (60) increases relatively less than the area of the friction surface of the front region (62).

3. Brake pad (10A, 10B) according to claim 2, wherein an area of the chamfered portion (64) of the rear region (60) is smaller than an area of the chamfered portion (66) of the front region (62).

4. Brake pad (10A, 10B) according to any of claims 2 and 3, wherein the chamfered portions (64, 66) of the rear region (60) and front region (62) are planar, an angle (D1) formed between the chamfered portion (64) of the rear region (60) and a plane comprising the fastening face is greater than an angle (D2) formed between the chamfered portion (66) of the front region (62) and the plane comprising the fastening face (32).

5. Brake pad (10A, 10B) according to any of claims 2 to 4, wherein the chamfered portion (64) of the rear region (60) includes an outer border (64A) and an inner border (64B), the inner border (64B) having a relatively shorter length than a length of the outer border (64A).

6. Brake pad (10A, 10B) according to any of the preceding claims, wherein the chamfered portion (66) of the front region (62) includes an outer border (66A) and an inner border (66B), the inner border (66B) having a relatively shorter length than a length of the outer border (66A).

7. Brake pad (10A, 10B) according to claim 1, wherein the rear region (60) includes two walls (60B, 60C), one (60B) whereof bears a friction surface of the rear region (60), the two walls (60B, 60C) comprising a common rim (34) and substantially forming a right angle therebetween.

8. Brake pad (10A, 10B) according to any of the preceding claims, wherein the collection groove (3) is disposed at a distance from the rear edge (34) of less than 10 millimeters.

9. Brake pad (10A, 10B) according to any of the preceding claims, wherein the collection groove (3) is directly hollowed out of the friction material, as far as the surface of the plate (20).

10. Disk brake assembly including a disk (9) and two brake pads (10A, 10B) according to any of the preceding claims, disposed on either side of the disk (9).

11. Disk brake system (19) comprising a disk (9) brake assembly according to the preceding claim, wherein the disk (9) is integral with an axle or with a wheel.
